# EUROPEAN PATENT SPECIFICATION

(11) **EP 3 733 251 B1**
(45) Date of publication and mention of the grant of the patent: **15.05.2024**
(21) Application number: 18896178.3
(22) Date of filing: 14.11.2018
(51) Int. Cl.: A63D 15/20

(54) **BILLIARD GAME SCORING SYSTEM**
SYSTEM ZUR BEWERTUNG VON BILLARDSPIELEN
SYSTÈME DE NOTATION DE PARTIE DE BILLARD

(30) Priority: 28.12.2017 CN 201711461959
(43) Date of publication of application: 04.11.2020
(73) Proprietor: Shenzhen Supervisions Technology Co., Ltd., Shenzhen, Guangdong 518109 (CN)
(72) Inventor: LIANG, Dong, Shenzhen, Guangdong 518109 (CN)
(74) Representative: Chung, Hoi Kan
(86) International application number: PCT/CN2018/115387
(87) International publication number: WO 2019/128505

(56) References cited:
- WO-A1-94/25126
- CN-A- 101 504 720
- CN-A- 102 068 808
- CN-A- 104 524 763
- CN-A- 108 079 565
- CN-Y- 201 282 530
- JP-A- 2008 079 657
- US-A1- 2011 294 585
- US-B2- 8 727 875
- US-B2- 9 827 483

## Description

### BACKGROUND OF THE INVENTION

### 1. Field of the Invention

The invention relates to billiards games and more particularly to a billiards game scoring system having improved characteristics.

### 2. Description of Related Art

Conventionally, scores of a billiards game is recorded manually. Specifically, a scorekeeper may record the score during a billiards game by observing billiards balls on the table and the billiards balls entered the pocket. It is not only cumbersome but also laborious. Further, it is error prone.

US Patent No. 8,727,875 entitled "automated enhancements for billiards and the like" discloses that generated position data is used to describe real-time positions of each of one or more billiard balls moving a playing surface of a billiard table; imagery is displayed on the playing surface; and the imagery dynamically responds to the position data as one or more billiard balls move on the playing surface. However, the US patent does not disclose an input device which can be operated by an individual.

Thus, the need for improvement still exists.

### SUMMARY OF THE INVENTION

The invention has been made in an effort to solve the problems of the conventional art including cumbersome, laborious and error prone by providing a billiards game scoring system having novel and nonobvious characteristics.

To achieve above and other objects of the invention, the invention provides a scoring system for a billiards game, comprising a camera, a computer, an output device, and an input device, characterized in that: the camera is configured to record images of a playing surface of a billiards table and a plurality of billiards balls on the playing surface; the computer is configured to analyze video data to obtain locations of the billiards balls based on a predetermined model, confirm a status of a scene of the billiards game based on the locations of the billiards balls, and record scores and/or obtain data of the current player based on the status of the scene and rules of playing the billiards game; the output device is configured to convert information of the scores and the current player into human-readable form; and the input device is configured to provide data and control signals from a user, and update the status of the scene based on the provided data and the control signals.

The scoring system for a billiards game of the invention has the following advantageous effects in comparison with the prior art: scoring is recorded automatically. Efficiency is increased greatly. It is capable of updating the game being player in substantially real time. Operation is simple. It is more practicable and easy to use. The score recording is made robust.

The invention is as defined in claim 1.

The above and other objects, features and advantages of the invention will become apparent from the following detailed description taken with the accompanying drawings.

### BRIEF DESCRIPTION OF THE DRAWINGS

The embodiments of figures 1-3B, 5 and 7 are not embodiments of the invention, but they are useful for the understanding of the invention.
FIG. 1 schematically depicts a billiards game scoring system according to a first preferred embodiment of the invention;
FIG. 2 schematically depicts an oval model of recording scores during a billiards game;
FIG. 3A schematically depicts strikes of balls without the assist of a cushion during a billiards game;
FIG. 3B schematically depicts strikes of balls with the assist of a cushion during a billiards game;
FIG. 4 schematically depicts a billiards game scoring system according to a second preferred embodiment of the invention;
FIG. 5 schematically depicts a billiards game scoring system according to a third preferred embodiment of the invention;
FIG. 6 schematically depicts a snooker scoring system according to the invention; and
FIG. 7 is a flow chart illustrating a billiards ball movement during a billiards game according to the invention.

### DETAILED DESCRIPTION OF THE INVENTION

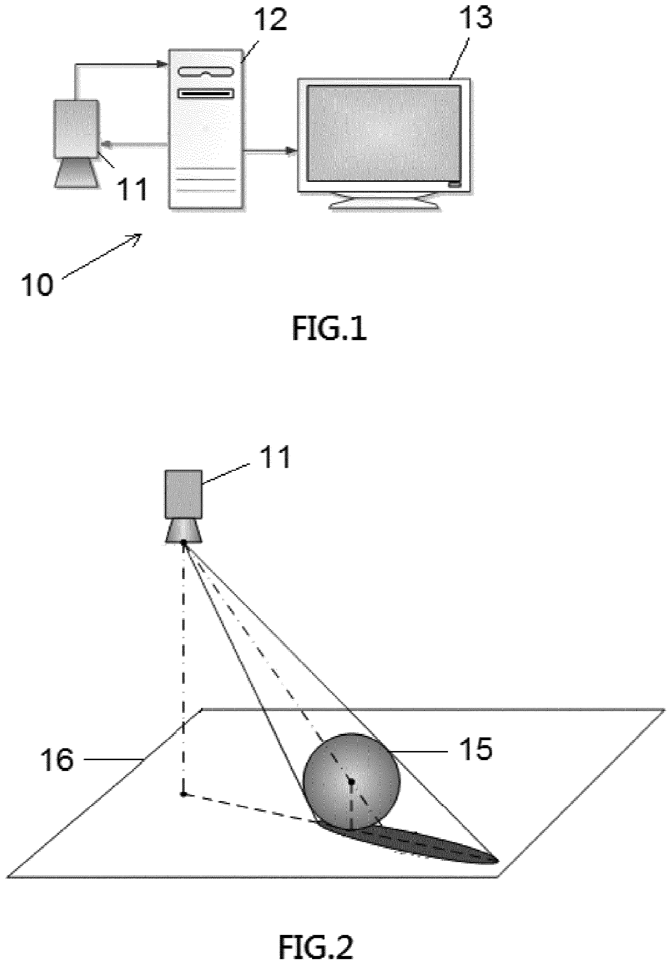

The embodiments of FIGS. 1-3B, 5 and 7 are not embodiments of the invention, but are useful for understanding of the invention.

Referring to FIGS. 1 and 2, a billiards game scoring system 10 in accordance with a first preferred embodiment of the invention comprises a camera 11, a computer 12, and an output device 13 as discussed in detail below.

The camera 11 is an optical instrument used to record images. For example, the camera 11 can be an industrial camera, a network camera, a monitoring camera, or a camera mounted on the monitor of a personal computer.

The computer 12 is a machine that can be instructed to carry out sequences of arithmetic or logical operations automatically via computer programming. For example, the computer 12 can be an industrial computer, a personal computer (PC), a laptop computer, a tablet computer, an embedded system, a single chip, a calculation chip, a smartphone, an intelligent television, or an intelligent camera having a microprocessor.

The output device 13 is any piece of computer hardware equipment which converts information into human-readable form. For example, the output device 13 can be a monitor, a display, a projector, a television, a loudspeaker enclosure, a signal light, or a printer.

The camera 11 is used to record images of a playing surface of a billiards table and the billiards balls 15 thereon. The computer 12 is used to analyze video data to obtain locations of the billiards balls 15 based on a predetermined model, confirm a status of a scene of the billiards game based on the locations of the billiards balls 15, and recording scores and/or obtain data of the current player based on the status of the scene of the billiards game and rules of playing the billiards game.

The status of the scene includes data of the locations of the billiards balls 15, status of the billiards balls 15, movements of the billiards balls 15, and the billiards balls 15 being struck.

The predetermined model is an oval model and the video data includes an oval area on the billiards table corresponding to the billiards ball 15.

The computer 12 is used to search a corresponding oval area of the oval model from the location of the billiards ball 15.

Further, the computer 12 is used to obtain a location of the billiards ball 15 on the oval area by calculation based on the camera 11 of the oval model, the billiards ball 15, the coordinates of the oval area corresponding to the billiards ball 15, and the location of the oval area of the oval model.

As shown in the oval model of FIG. 2 specifically, the camera 11 emits light toward the ball 15 with an oval area projected on a playing surface 16 of a billiards table in which the oval is the image of the ball 15 recorded by the camera 11. It is understood that the ball 15 has a fixed size and has a point contacting the playing surface 16 during a billiards game. Both location of the ball 15 and projection point on the playing surface 16 of ball center along a vertical line are obtained. Thus, location of the oval (i.e., center of the oval) can be obtained if the location of the ball 15 and details of the oval including length of the long axis, the length of the short axis, and the direction of the long axis are known. To the contrary, the location of the ball 15 and the details of the oval can be obtained based on the location of the oval. The locations and the lengths are based on the coordinates of the playing surface 16, the coordinates of the image, or a rectangular coordinate system. It is noted that the optical axis of the camera 11 perpendicular to the playing surface 16 is an ideal case. The projection of the ball 15 on the playing surface 16 is still an oval and the above values still can be obtained even when the optical axis of the camera 11 is not perpendicular to the playing surface 16.

As described above, the location of the ball 15 and the details of the oval including length of the long axis, the length of the short axis, and the direction of the long axis can be obtained if the location of the oval (i.e., center of the oval) is known. One embodiment is described below.

A center of the playing surface 16 is taken as an original point and the playing surface 16 is a plane having a z-axis value of zero (i.e., Z=0), a direction along a long cushion of the playing surface 16 is taken as an x-axis, and a direction along a short cushion of the playing surface 16 is taken as a y-axis. Thus, a rectangular coordinate system is established. A distance from the source of light of the camera 11 to the playing surface 16 is labeled as h, i.e., the source of light of the camera 11 being expressed by coordinates (0, 0, h). The location of the ball 15 on the playing surface 16 is expressed by coordinates (x, y) and the ball 15 has a radius of r. Center of the ball 15 is expressed by coordinates (x, y, r). A cone having an apex of (0, 0, h) is formed and has a tangent plane that touches the surface of the ball 15. An oval is formed when the base of the projected cone touches the playing surface 15. The center of the oval is expressed by (x', y', 0). The oval has a long axis a and a short axis b. The long axis a extends at an angle θ with respect to the long cushion of the billiards table.

x', y', a, b, and θ are obtained from h, x, y, and r by projecting light toward the ball 15. It can be obtained by defining a conic expression and solving the conic expression in cooperation with the plane. To the contrary, x, y, a, b, and θ can be obtained from the known h, x', y', and r. It is required to take x and y as values to be determined. Similarly, a conic expression is defined and the conic expression in cooperation with the plane is solved. As a result, values x and y are obtained. Above is only a preferred embodiment. Alternative embodiments are possible and their details are omitted herein for the sake of brevity.

In the following configuration of the preferred embodiment, the video data includes oval areas corresponding to the ball 15 on the playing surface 16. Specifically, the video data includes the oval areas on the playing surface 16. For example, there is no overlapped area between any two adjacent ovals, i.e., all ovals are independent. Alternatively, at least one oval is independent and other ovals are overlapped. Still alternatively, all ovals are not independent, i.e., any oval having a portion overlapped with an adjacent oval. Any oval areas complied with the oval model are found from the location information. For example, Hough Transform or random sample consensus (RANSAC) is used to find all ovals complied with the values (x', y', a, b, θ) from the location information.

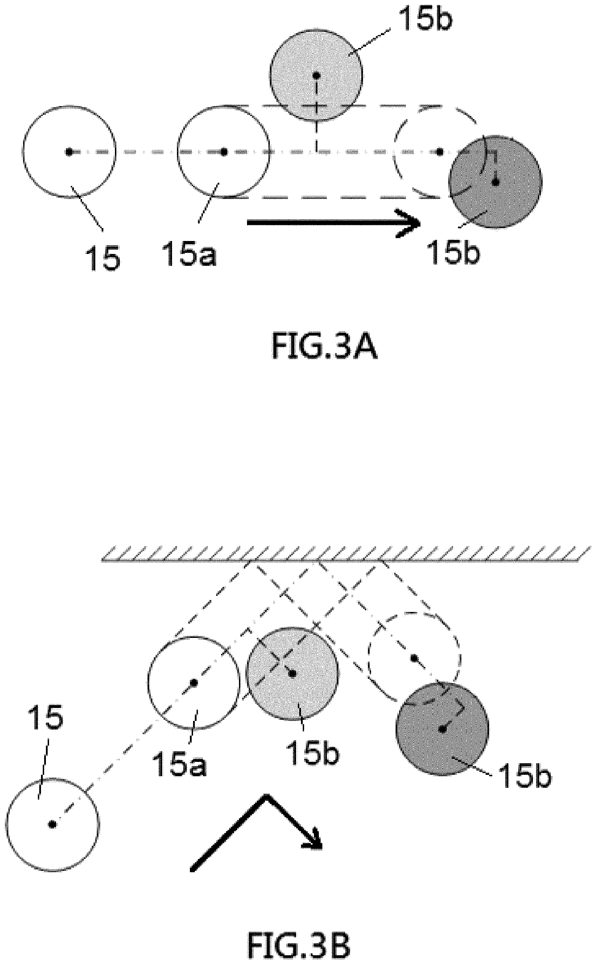

Referring to FIGS. 3A and 3B, optionally, the status of the ball 15 includes moving, disappearance and in pocket. In detail, a moving ball 15 means the ball 15 is on the playing surface 16 and the location of the ball 15 is confirmed by the scoring system; a ball 15 in the pocket means the ball 15 enters the pocket and the location of the ball 15 is confirmed by the scoring system; and a ball 15 is disappeared means the ball 15 is put out of sight or otherwise its location cannot be confirmed by the scoring system, and the scoring system cannot confirm whether the ball 15 is in the pocket.

Optionally, the status of movement of the scene includes moving, ready and waiting. If the status of movement of the scene is waiting, the camera 12 may update the status of the scene to moving after detecting a white cue ball 15a is struck. If the status of movement of the scene is moving, the location of the detected ball 15 may change to a value less than a predetermined threshold, and the detected ball 15 is required to be ready, the status of movement of the scene is updated to ready. If the status of movement of the scene is moving, the location of the detected ball 15 may change to a value less than the predetermined threshold, and the detected ball 15 is not required to be ready, the status of movement of the scene is updated to waiting. The predetermined threshold can be set based on required precision. Optionally, the predetermined threshold is slightly greater than 0.

Optionally, the computer 12 is used to confirm whether the white cue ball 15a strikes an object ball 15b or not in one shot.

Optionally, the computer 12 divides the video data into a plurality of frames.

Location of the white cue ball 15a can be estimated based on both the previous location and current location of the white cue ball 15a.

Regarding whether there is an overlapped area between an object ball 15b and an estimated moving direction of a white cue ball 15a, it is required to define the estimated moving direction of the white cue ball 15a as a current location of the white cue ball 15a at the current frame to the estimated location of the white cue ball 15a at a next frame, i.e., traces of the white cue ball 15a. The object ball 15b is defined as the billiards ball 15 to be struck by the white cue ball 15a.

If there is an overlapped area between an object ball 15b and an estimated moving direction of a white cue ball 15a, the object ball 15b is defined as the first ball that is struck by the white cue ball 15a in the shot.

If there is an overlapped area between a plurality of object balls 15b and an estimated moving direction of a white cue ball 15a, the object ball 15b that is nearest to the white cue ball 15a at the current frame is defined as the first ball that is struck by the white cue ball 15a in the shot. The distance between the nearest object ball 15b and the white cue ball 15a at the current frame is a predetermined distance.

It is possible of estimating a location of the white cue ball 15a at a next frame if the location of the white cue ball 15a at the current frame and the location of the white cue ball 15a at the next frame are known. An oval area of broken lines is formed by the passage of the white cue ball 15a moving from the current frame to the estimated next frame and the oval area of broken lines is defined as estimated moving area of a white cue ball 15a. The ball 15 being struck by the white cue ball 15a is defined as an object ball 15b. It is determined whether there is an overlapped area between each object ball 15b and the estimated moving area of the white cue ball 15a. If it is determined that at least one object ball 15b overlaps the estimated moving area of the white cue ball 15a, the center of the each object ball 15b is projected along an axis of movement in which the object ball 15b corresponding to the rearmost projection point is defined as the first ball that is struck by the white cue ball 15a.

FIG. 3A schematically depicts strikes of balls without the assist of a cushion during a billiards game, and FIG. 3B schematically depicts strikes of balls with the assist of a cushion during a billiards game, i.e., the white cue ball 15a ricocheting from the cushion and hitting the object ball 15b. An estimated moving area of the white cue ball 15a can be formed. Further, images of the white cue ball 15a at the current frame, the white cue ball 15a at the previous frame, the estimated location of the white cue ball 15a, and the location of the object ball 15b can be recorded. Thus, a straight estimated moving area of the white cue ball 15a is formed for processing and analysis. One or more previous frames of the white cue ball 15a can be taken. A moving distance from the white cue ball 15a at its current frame to its next frame can be a value equal to a predetermined value. Alternatively, the moving distance from the white cue ball 15a at its current frame to its next frame is a value greater than the predetermined value based on the previous speed and a moving distance from the current frame to the next frame obtained by calculation.

The output device 13 is used to convert scoring information of all players and scores recorded by the current player into human-readable form.

The billiards game scoring system 10 in accordance with the first preferred embodiment of the invention comprises the camera 11, the computer 12, and the output device 13 in which the camera 11 is used to record images of the billiards table and the billiards balls 15 thereon; the computer 12 is used to analyze video data of a predetermined model to obtain locations of the billiards balls 15, confirm the status of the scene based on the locations of the billiards balls 15, and recording scores and/or obtain data of the current player based on the status of the scene and rules of playing the billiards game; and the output device 13 is used to convert information of all players and scores recorded by the current player into human-readable form. This is automatic and thus the score recording efficiency is greatly increased. Further, the invention is simple to operate, highly practicable and easy to use.

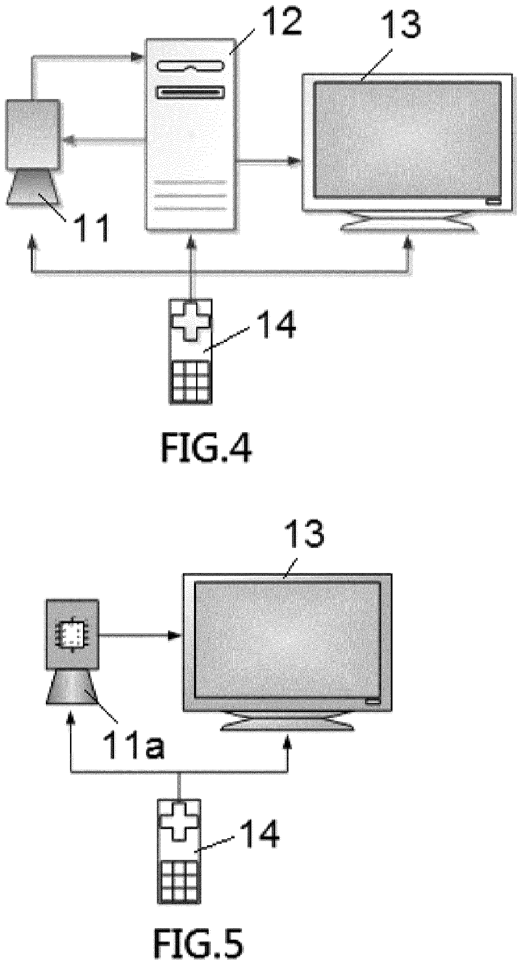

Referring to FIG. 4, a billiards game scoring system 40 in accordance with a second preferred embodiment of the invention comprises the camera 11, the computer 12, the output device 13, and an input device 14 for providing data and control signals from a user to the camera 11, the computer 12, and the output device 13 respectively. Examples of the input device 14 include a remote control, a touch panel, a computer mouse, a keyboard, a touchscreen, and a microphone. In addition, voice and gestures of a user can be used data provided from a user to the camera 11, the computer 12, and the output device 13 via the input device 14 such as the remote control, the touch panel, the computer mouse, the keyboard, the touchscreen, or the microphone.

The computer 12 is used to process the input information and update the current status of a billiards game being played.

Optionally, the billiards game is a snooker game and the input information includes the player who commits a foul shot and information of a free ball. According to the rules of snooker, after a player has played a foul shot, next the opponent may play a cue ball selected by himself or herself or play the ball being foul shot by the player. A free ball allows a player to call any ball as the ball she/he would have wanted to play, potting it for the same number of points, or the opponent can be put back in without the same privilege, having to play the ball snookered on.

The output information includes the current player and scores of both the current player and the opponent or scores of more than two players.

Referring to FIG. 5, a billiards game scoring system 40 in accordance with a third preferred embodiment of the invention comprises an intelligent camera 11a, the output device 13, and the input device 14 in which the intelligent camera 11a is used to record images as well as process video data for analysis by means of its internal microprocessor. In short, functions of the camera and computer are incorporated into the intelligent camera 11a of the invention. The intelligent camera 11a is replaced by an intelligent video adapter.

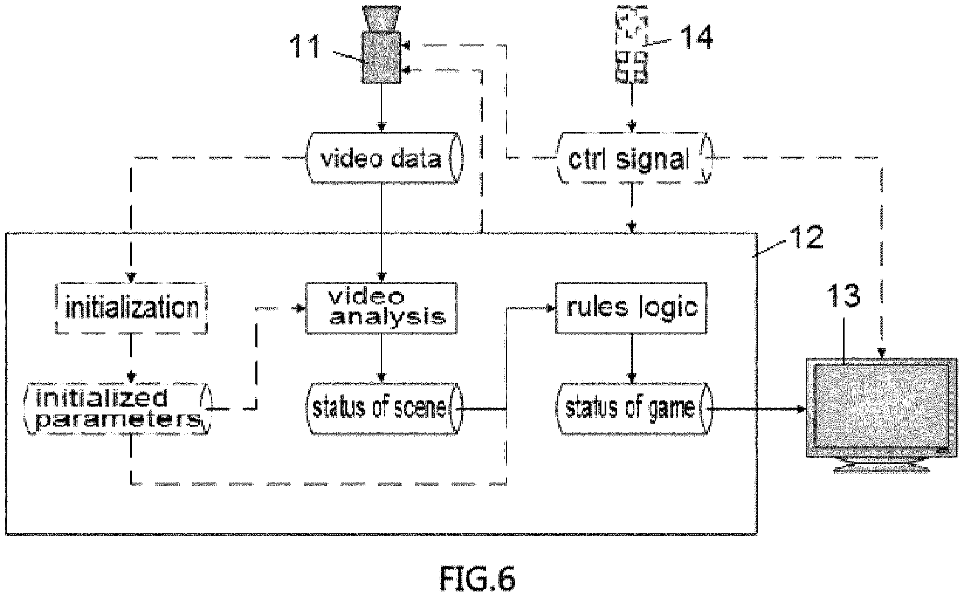

Referring to FIG. 6, it depicts a snooker scoring system which is based on the second preferred embodiment of the invention. The scoring flowchart is as below. The camera 11 is used to record images of the billiards table and the billiards balls 15 thereon during a snooker game. The images (i.e., video data) are sent to the computer 12. The computer 12 next processes the images for analysis. Status of the scene is sent to the output device 13 for display. Further, the input device 14 may generate a control signal which is sent to the camera 11, the computer 12 or the output device 13 respectively for control purpose. Alternatively, the computer 12 may generate a control signal which is sent to the camera 11 for control purpose.

The computer 12 includes a video analysis module and a rules logic module. Further, the computer 12 includes an initialization module which is used to establish a model based on factors including non-varying or varying factors. The factors include camera imaging parameters, picture conversion parameters and an effective area of the playing surface, pocket shapes and locations, color of the playing surface and ball colors. The imaging parameters include identification rate, scene rate, exposure time and white balance parameters. The picture conversion parameters include variance correction coefficients and single transform matrixes. The effective area of the playing surface can be simplified as a rectangle for precise description. The pocket shape can be simplified as a circle and size and location of the pocket can be predetermined or set specifically for the current billiards table. The color of the playing surface can be modularized as a whole or locally. The ball colors can be a single color or modularized by means of Gauss mixed model. The initialization module can create or update initialization parameters for applications in video analysis sub-module and/or rules logic sub-module.

The initialization module can be activated when the system starts up or at the beginning of a game, or in case of necessary. The initialization module is advantageous but not required. The initialization module can be transferred to other sub-modules or divided into sub-modules to be performed. The video analysis sub-module and rules logic sub-module can be performed frame by frame. Alternatively, the video analysis sub-module and rules logic sub-module can be performed per a number of frames. Still alternatively, the video analysis sub-module and rules logic sub-module can be performed when the system determines that it has satisfied specific conditions.

The video analysis sub-module is used to analyze the video data and create and/or update the status of the scene including locations of the balls, types of the balls, types of ball moving, and marker of the first struck ball.

The locations of the balls include locations of all balls on the playing surface. Optionally, information about balls under the billiards table, information about target locations of ready balls, and information about historic locations of respective balls are provided. Methods of positioning a ball include image division, module matching, shape determination, curve merging and a combination thereof. The location of a ball can be labeled by coordinates of the image or rectangular coordinate system.

The status of a ball includes a moving ball and a ball under the table. Further, the status of a ball includes moving, disappearance, in pocket after the current shot, outside after shot, in pocket after the previous shot, and ready. In detail, a moving ball means the ball is on the playing surface and the location of the ball is confirmed by the scoring system; a ball in the pocket means the ball enters the pocket and the location of the ball is confirmed by the scoring system; and a ball is disappeared means the ball is put out of sight or otherwise its location cannot be confirmed by the scoring system, and the scoring system cannot confirm whether the ball is in the pocket.

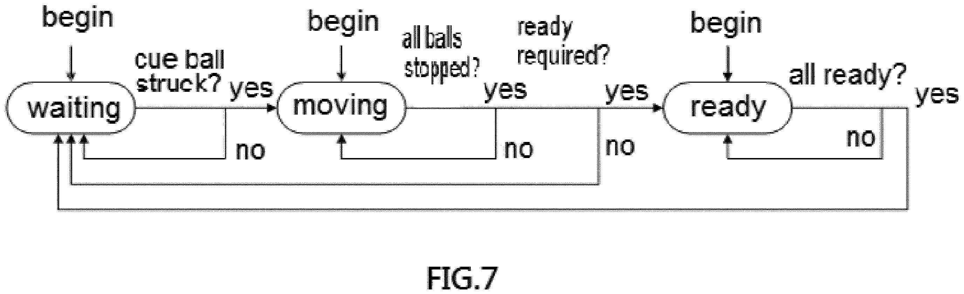

Referring to FIG. 7, it is a flow chart illustrating a billiards ball movement during a billiards game according to the invention. The status of movement of the scene includes moving, ready and waiting. If the status of movement of the scene is waiting, the status of movement of the scene is updated to moving after detecting a white cue ball is struck. If the status of movement of the scene is moving and after all balls are stopped as detected, the status of movement of the scene is updated to ready if the detected ball is required to be ready by determination or the status of movement of the scene is updated to waiting if the detected ball is not required to be ready by determination. If the status of movement of the scene is moving and after all balls are ready as detected, the status of movement of the scene is updated to waiting. The status of movement of the scene is ready at the beginning of a billiards game. But the status of movement of the scene is waiting or moving depending on the game being played. The above conversion logic is based on the rules of snooker. A ball cannot be positioned after stop if there is no need of positioning a ball. A shot can be made only after all balls are stopped. A ball can be positioned after stop if there is need of positioning a ball. A shot can be made after all balls are positioned. The conversion logic can be changed appropriately if the system allows a billiards game not to follow the rules.

The object ball is defined as the first ball that is struck by the white cue ball in the shot. When the status of the scene is moving, the object ball is defined as the first ball that is struck by the white cue ball in the shot as detected.

The rules logic sub-module is used to analyze the video data and create and/or update the status of the scene. As described above, the status of the scene includes locations of the balls, status of the balls, status of movement of the scene, and information of ball striking. The information of ball striking includes marker of the first struck ball. Basically, the status of the scene (i.e., game being played) includes scores of two players, the player making a shot now and the current object ball. Optionally, the status of the scene further includes more information of the game being played and statistics of the game being played such as the current consecutive scoring, the maximum score, the attack success rate, the defense success rate and time of making shot.

The rules logic sub-module is not required to perform frame by frame and is performed at the end of moving. At this time, a correct logic is performed to update the game being played and the scene based on the previous game being played and the current scene and rules of snooker.

For example, the previous game is summarized below. The active player is A, the score is 50:40, and the object ball is yellow. The scene is described below. The first struck ball is yellow object ball, the status of the yellow object ball is in pocket at the first shot, the status of 16 red object balls is in pocket at the previous shot, and white, green, brown, blue, pink and black balls are moving. After the game has been updated, it shows the following: the active player is A, the score is 52:40, and the object ball is green. The updated scene is as below. The first struck ball is labeled clear and the status of the yellow object ball is in pocket at the previous shot.

It is noted that above module classification and introduction are only descriptive and it implies some changes that do not change its nature. For example, ball positioning or first struck ball can be seen as a part of the status of ball, the status of ball can be seen as a part of movement, and the status of movement or the status of the scene can be seen as a part of the game being played.

As described above, it is optional to activate the input device 14 to provide control signals from a user to the camera 11, the computer 12, and the output device 13 respectively for control purpose. It means that a user not only can see results processed by the system but also can control the system and monitor the game being played. For example, when one player commits a foul the other player (i.e., opponent) has the freedom of striking a ball or allowing the opponent to continue the playing based on the rules of snooker. Such decision can be made by sending a control signal to the system. The input device 14 is a source of control signals or media. For example, the player may control the system by voice. In detail, the microphone of the computer 12 can be taken as the input device 14 or the user speaking can be taken as the input device 14. Alternatively, the player may control the system by gesture. In detail, the camera 11 can be taken as the input device 14 or the user making a gesture can be taken as the input device 14. The input device 14 can be an independent device, a module or a part of a module. For example, the input device 14 is implemented as a remote control which is accessory to the output device 13; a keyboard or a mouse which is accessory to the computer 12; or the camera 11. The decision of which player can play after a foul has committed can be made by activating a facial recognition system to identify or verify a player from a digital image from the camera 11 which is taken as the input device 14.

As described above, it is optional to instruct the computer 12 to generate control signals and send same to the camera 11 for control purpose. The input device 14 is used to manually control the system. But the system of the invention can be controlled automatically. For example, the exposure time of the camera 11 can be adjusted appropriately if the luminance of the image shown on the monitor of the computer 12 is too high or too low. The direction of the lens of the camera 11 can be adjusted appropriately if the viewing range of the camera 11 does not cover the effective area of the playing surface 16 of the billiards table as detected. It is noted that the computer 12 is capable of doing automatic analysis and execution in the embodiment. But the invention is limited to above equipment in practice. For example, the intelligent camera 11a can adjust control parameters and direction of the lens thereof and the microprocessor of the intelligent camera 11a is provided in the computer 12.

Above four modules can be incorporated into another device or disposed independently. For example, the camera 11, the computer 12, the output device 13 and the input device 14 are provided in a laptop computer. Alternatively, the camera 11, the computer 12, the output device 13 and the input device 14 are provided as four independent devices. Still alternatively, the camera 11, the computer 12, the output device 13 and the input device 14 are provided in two or three devices. For example, the computer 12, the output device 13 and the input device 14 are provided in an intelligent computer and the camera 11 is implemented as an industrial camera.

Each of above modules can be implemented as one or more devices. For example, the camera 11 can be implemented as a single device or a plurality of cameras arranged as an array which can be a unit or distributive. Likewise, the computer 12 can be implemented as a single device or a plurality of distributive computers; the output device 13 can be implemented as a single device or a plurality of monitors or a combination of monitor and loudspeaker enclosure; and the input device 14 can be implemented as a single device or a combination of remote control and touchscreen.

Each of above modules can be implemented as a number of separate parts which are disposed in different devices respectively. For example, the computer 12 is implemented as three parts in which the first part is provided in the microprocessor of the intelligent camera 11a, the second part is provided in a CNC machine, and the third part is provided in an intelligent television. Thus, the first part of the computer 12 and the camera 11 are provided as a unit; and the third part of the computer 12 and the output device 13 are provided as a unit.

The modules and the devices in each module can be fixed in another device. For example, they are mounted in a laptop computer. Alternatively, they are mounted by inserting in a socket, by wire connection, or wirelessly. For example, the video data collected by the camera 11 can be sent to the computer 12 by a data cable, a network cable, or WIFI. Distances between any two modules or distances between any two devices in the same module can be very small or as far as across an ocean.

In the embodiment of the invention, with the addition of the input device 14 which is capable of updating the game being player in substantially real time by providing data and control signals from a user to each of the above modules. Thus, score recording is made robust.

While the invention has been described in terms of preferred embodiments, those skilled in the art will recognize that the invention can be practiced with modifications within the scope of the appended claims.

## Claims

1. A scoring system (40) for a billiards game, comprising a camera (11), a computer (12), an output device (13) and an input device (14) wherein:
the camera (11) is configured to record images of a playing surface (16) of a billiards table and a plurality of billiards balls (15) on the playing surface (16);
the computer (12) is configured to analyze video data to obtain locations of the billiards balls (15) based on a predetermined model, confirm a status of a scene of the billiards game based on the locations of the billiards balls (15), and record scores and/or obtain data of the current player based on the status of the scene and rules of playing the billiards game;
the output device (13) is configured to convert information of the scores and the current player into human-readable form **characterized in that**: the computer (12) further comprises an initialization module configured to establish a model based on camera imaging parameters, picture conversion parameters, an effective area of the playing surface, pocket shapes and locations, color of the playing surface and ball colors; wherein the camera imaging parameters further comprise identification rate, scene rate, exposure time and white balance parameters, and the picture conversion parameters further comprise variance correction coefficients and single transform matrixes; the initialization module is configured to activate when the scoring system starts up or at a beginning of a billiards game; and
the input device (14) is configured to provide data and control signals from a user to the camera (11), the computer (12), and the output device (13) respectively, and update the status of the scene based on the provided data and the control signals.

## Patentansprüche

1. Scoring-System (40) für ein Billardspiel, umfassend eine Kamera (11), einen Computer (12), eine Ausgabevorrichtung (13) und eine Eingabevorrichtung (14), wobei
die Kamera (11) so konfiguriert ist, dass sie Bilder einer Spielfläche (16) eines Billardtisches und einer Vielzahl von Billardkugeln (15) auf der Spielfläche (16) aufnimmt;
der Computer (12) so konfiguriert ist, dass er Videodaten analysiert, um Positionen der Billardkugeln (15) auf der Grundlage eines vorbestimmten Modells zu erhalten, einen Status einer Szene des Billardspiels auf der Grundlage der Positionen der Billardkugeln (15) zu bestätigen und Spielstände aufzuzeichnen und/oder Daten des aktuellen Spielers auf der Grundlage des Status der Szene und der Spielregeln des Billardspiels zu erhalten;
die Ausgabevorrichtung (13) so konfiguriert ist, dass sie Informationen über die Spielstände und den aktuellen Spieler in eine für den Menschen lesbare Form umwandelt,
**dadurch gekennzeichnet,**
**dass** der Computer (12) des Weiteren ein Initialisierungsmodul umfasst, das so konfiguriert ist, dass es ein Modell basierend auf Kameraabbildungsparametern, Bildumwandlungsparametern, einer effektiven Fläche der Spielfläche, Taschenformen und -positionen, der Farbe der Spielfläche und Kugelfarben erstellt; wobei die Kameraabbildungsparameter des Weiteren eine Identifikationsrate, eine Szenenrate, eine Belichtungszeit und Weißabgleichsparameter umfassen, und wobei die Bildumwandlungsparameter des Weiteren Varianzkorrekturkoeffizienten und Einzeltransformationsmatrizen umfassen, wobei das Initialisierungsmodul so konfiguriert ist, dass es aktiviert wird, wenn das Scoring-System gestartet wird oder zu Beginn eines Billardspiels; und
**dass** die Eingabevorrichtung (14) so konfiguriert ist , dass sie Daten und Steuersignale von einem Benutzer an die Kamera (11), den Computer (12) bzw. die Ausgabevorrichtung (13) liefert und den Status der Szene auf der Grundlage der gelieferten Daten und der Steuersignale aktualisiert.

## Revendications

1. Système de score (40) pour un billard, comprenant une caméra (11), un ordinateur (12), un appareil de sortie (13) et un appareil de entrée (14), dans lesquels ladite caméra (11) est configurée pour enregistrer des images d'une surface de jeu (16) d'une table de billard et une pluralité de boules de billard (15) sur la surface de jeu (16);
ledit ordinateur (12) est configuré pour analyser les données vidéo afin d'obtenir des positions des boules de billard (15) sur la base d'un modèle prédéterminé, de confirmer un état d'une scène du jeu de billard sur la base des positions des boules de billard (15), et d'noter des scores et/ou d'obtenir des données du joueur actuel sur la base de l'état de la scène et des règles du jeu de billard; ledit appareil de sortie (13) est configuré pour convertir des informations des scores et du joueur actuel en forme lisible par l'homme,
**caractérisé en ce que** ledit ordinateur (12) comprend en outre un module d'initialisation configuré pour établir un modèle basé sur des paramètres photographiques, des paramètres de conversion d'image, une surface effective de la surface de jeu, des formes et positions de sac, une couleur de la surface de jeu et des couleurs de la boule; dans lesquels les paramètres photographiques comprennent en outre un taux d'identification, un taux de scène, un temps d'exposition et des paramètres de balance de blanc, les paramètres de conversion d'image comprennent en outre des coefficients de correction de variance et des matrices à transformée unique; le module d'initialisation est configuré pour s'activer au démarrage du système de score ou au début d'un billard; ledit appareil de entrée (14) est configuré pour fournir des données et des signaux de contrôle d'un utilisateur à ladit caméra (11), audit ordinateur (12) et audit appareil de sortie (13), respectivement, et mettre à jour l'état de la scène sur la base des données fournies et des signaux de contrôle.
